(19) Europäisches Patentamt
European Patent Office
Office européen des brevets

(11) **EP 4 715 572 A2**

(12) **EUROPEAN PATENT APPLICATION**

(43) Date of publication:
25.03.2026 Bulletin 2026/13

(21) Application number: 25225648.2

(22) Date of filing: 19.12.2025

(51) International Patent Classification (IPC):
**G06F 8/30** (2018.01) **G06N 3/126** (2023.01)

(52) Cooperative Patent Classification (CPC):
G06F 8/30; G06N 3/006; G06N 3/045; G06N 3/08;
G06N 3/086; G06N 3/126; G06N 5/01; G06N 7/01;
G06N 20/00

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: 09.10.2025 CN 202511430734

(71) Applicant: BEIJING BAIDU NETCOM SCIENCE
TECHNOLOGY CO., LTD.
Beijing 100085 (CN)

(72) Inventors:
• **Wu, Chufan**
**Beijing, 100085 (CN)**
• **Hou, Zhinan**
**Beijing, 100085 (CN)**
• **Li, Annan**
**Beijing, 00085 (CN)**
• **Wu, Jianmin**
**Beijing, 100085 (CN)**
• **Shen, Dou**
**Beijing, 100085 (CN)**

(74) Representative: **advotec.**
**Patent- und Rechtsanwaltspartnerschaft mbB
Widenmayerstraße 4
80538 München (DE)**

(54) **PACE METHOD FOR GENERATING ADAPTIVE PROGRAMS BASED ON ARTIFICIAL INTELLIGENCE, AGENT, AND STORAGE MEDIUM**

(57) The invention discloses a method for generating an adaptive program based on artificial intelligence (AI), an agent, and a storage medium, relating to the AI-related fields. The method includes: determining diversity information of a target population, wherein the diversity information indicates program diversity of the target population; determining a temperature parameter according to the diversity information, wherein the temperature parameter is used to adjust a selection pressure; selecting, from the target population according to the temperature parameter, a first parent program and a second parent program corresponding to the first parent program; and obtaining a target program by performing an evolution iteration according to the first parent program and the second parent program. The invention may adaptively select a parent program based on the temperature parameter, enhance a balance between exploration and exploitation in an evolution process, and consequently efficiently generate diversified and high-performance programs.

FIG. 1

**Description**

**TECHNICAL FIELD**

The present invention relates to a field of computer technology, and particularly to a field of artificial intelligence (AI), such as deep learning, large model, agent, coding agent, and assisted programming, and specifically to a method for generating an adaptive program based on AI, an agent, an electronic device, and a storage medium.

**BACKGROUND**

Evolutionary algorithms are a kind of optimization algorithms inspired by biological evolutionary theory. By simulating mechanisms such as natural selection, heredity, and mutation, an optimal solution or a near-optimal solution are searched in a solution space. The evolutionary algorithms have been widely applied in fields such as engineering design, bioinformatics, and artificial intelligence (AI). For example, in the field of AI, the evolutionary algorithms may be applied to program generation, optimization of scientific computing models, and so on.

**SUMMARY**

The present disclosure provides a method for generating an adaptive program based on artificial intelligence (AI), an agent, an electronic device, and a storage medium. Specific solutions are as follows.

According to a first aspect of the present invention, a method for generating an adaptive program based on AI is performed by an agent in an electronic device, including: determining diversity information of a target population, in which the diversity information indicates program diversity of the target population; determining a temperature parameter according to the diversity information, in which the temperature parameter is used to adjust a selection pressure; selecting, from the target population according to the temperature parameter, a first parent program and a second parent program corresponding to the first parent program; and obtaining a target program by performing an evolution iteration according to the first parent program and the second parent program.

According to a second aspect of the present invention, an agent is provided, which is configured to perform the method according to the above first aspect.

According to a third aspect of the present invention, a non-transitory computer-readable storage medium for storing computer instructions is provided, in which the computer instructions are configured to cause a computer to implement the method according to the above first aspect.

According the solutions of the invention, during an evolution iteration process, the temperature parameter may be dynamically adjusted according to the diversity information of the population, which may improve a matching degree between the temperature parameter and the program diversity of the population, may thus adaptively select a parent program based on the temperature parameter, may enhance a balance between exploration and exploitation in an evolution process, and may consequently efficiently generate diversified and high-performance programs.

**BRIEF DESCRIPTION OF THE DRAWINGS**

The accompanying drawings are described for a better understanding of the invention.

FIG. 1 is a flowchart of a method for generating an adaptive program based on artificial intelligence (AI) according to an embodiment of the present invention.
FIG. 2 is a flowchart of a method for generating an adaptive program based on AI according to another embodiment of the present invention.
FIG. 3 is a flowchart of a method for generating an adaptive program based on AI according to another embodiment of the present invention.
FIG. 4 is a flowchart of a method for generating an adaptive program based on AI according to another embodiment of the present invention.
FIG. 5 is a block diagram of an agent according to an embodiment of the present invention.
FIG. 6 is a block diagram of an electronic device for implementing the method for generating an adaptive program based on AI according to the embodiments of the present invention.

**DETAILED DESCRIPTION**

The following description of the exemplary embodiments of the present invention is made in conjunction with the accompanying drawings, including various details of the embodiments to aid understanding. These details should be considered merely exemplary.

It needs to be noted that, in the technical solutions of the present invention, acquisition, storage, use, and processing of data are all in compliance with the provisions of relevant laws and regulations, and do not violate public order and moral.

A method for generating an adaptive program based on artificial intelligence (AI), an agent, an electronic device, and a storage medium according to the embodiments of the present invention are described below with reference to the accompanying drawings.

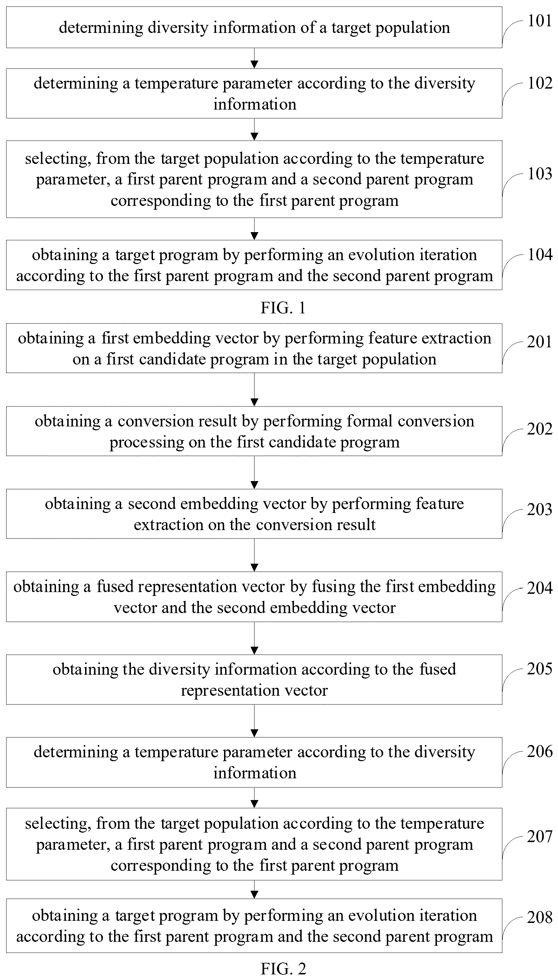

FIG. 1 is a flowchart of a method for generating an adaptive program based on AI according to an embodiment of the present invention.

The method for generating an adaptive program based on AI according to the embodiments of the present invention may be performed by the agent of the embodiments of the present invention, and the agent may be configured in an electronic device.

The electronic device may be any device with a computing capability, for example, a personal computer, a mobile terminal, a server, etc. The mobile terminal may be, for example, a vehicle-mounted device, a mobile phone, a tablet computer, a personal digital assistant, a wearable device, or other hardware devices equipped with various operating systems, touch screens, and/or display screens.

As shown in FIG. 1, the method for generating an adaptive program based on AI includes following steps at S101 to S104.

At S101, diversity information of a target population is determined.

In the present invention, for a target problem in a target domain/field, a batch of programs may be randomly generated or generated using a large model, which are in turn distributed into at least one initial population. Each initial population undergoes an independent evolution iteration to select a program for solving the target problem from a population at the end of evolution.

For example, the target field may include fields of automated algorithm discovery, scientific computing model optimization, autonomous driving strategy optimization, generative AI, or other fields, which is not limited herein.

The target problem may be a problem within the target field that may be solved by a program.

For example, the target field is the field of automated algorithm discovery, where it is expected to automatically discover a new and efficient algorithm for a specific problem (such as community discovery on large-scale graph data).

In the present invention, during any one evolution iteration process, diversity information of a current target population may be determined.

For example, the target population may be any population corresponding to the target problem. The target population may include at least one program, and the diversity information may indicate program diversity of the target population. In addition, for ease of distinction, a program belonging to the target population may be referred to as a first candidate program.

For example, the diversity information may include a diversity index, a diversity level, etc. The diversity index may be a value, and a diversity index of the target population may indicate a level (high/low) of program diversity in the target population, for example, a larger diversity index indicates higher program diversity in the target population. A diversity level of the target population may also indicate a level (high/low) of program diversity in the target population, for example, a higher diversity level indicates higher program diversity in the target population.

For example, diversity information of a program in the target population may be determined according to similarities between first candidate programs in the target population.

For example, if there are a plurality of target populations, diversity information of each target population may be determined separately.

It may be understood that there may be one or a plurality of the target populations, which is not limited in the present invention.

At S102, a temperature parameter is determined according to the diversity information.

The temperature parameter may be used to adjust a selection pressure. For example, a larger temperature parameter favors exploration, while a smaller temperature parameter favors exploitation.

In the present invention, the temperature parameter may be determined according to the diversity information and in combination with a current evolution iteration number.

For example, the current evolution iteration number may be used to define an annealing schedule. Then, a current temperature parameter is determined according to the diversity information in combination with the annealing schedule.

For example, as the evolution iteration number increases, the temperature parameter decreases, exploitation is favored in a later stage of the evolution iteration. Furthermore, when the program diversity of the target population is high, the temperature parameter may be decreased according to the diversity information so as to promote exploitation. When the program diversity is low, the temperature parameter may be increased according to the diversity information so as to enhance randomness and promote exploration.

At S103, a first parent program and a second parent program corresponding to the first parent program are selected from the target population according to the temperature parameter.

In the present invention, according to the temperature parameter, a selection probability of a first candidate program in the target population may be determined, and the first parent program may be selected from first candidate programs according to the selection probability, and the second parent program may be selected from the first candidate programs for the first parent program.

For example, the selection probability of the first candidate program may be determined according to a fitness value of the first candidate program and the temperature parameter. The fitness value of the first candidate program may be calculated using an objective function defined for the target problem.

For example, the target domain is the field of autonomous driving strategy optimization, aiming to generate a logic program for controlling vehicles to avoid obstacles and for path planning. The objective function may be safety, smoothness, traffic efficiency, etc., in an autonomous driving simulation environment.

At S104, a target program is obtained by performing an evolution iteration according to the first parent program and the second parent program.

In the present invention, a child program may be generated by performing crossover and mutation operations on the first parent program and the second parent program. A first candidate program with a low fitness value in the target population is replaced with the child program to obtain a new population. If an evolution iteration termination condition is not met, the new population may be taken as the target population for a next evolution iteration until the evolution iteration termination condition is met, so that a final population is obtained and the target program is selected from the final population.

For example, if there is one child program, the first candidate program with the lowest fitness value in the target population may be replaced with the child program. If there are a plurality of child programs, the first candidate programs with the lowest fitness value in the target population may be replaced with the plurality of child programs, in which the number of the first candidate programs is the same as the number of child programs. It may be seen that a number of programs in the new population may be the same as a number of programs in the target population.

For example, the evolution iteration termination condition may be reaching a preset iteration number, or finding a solution that meets performance requirements, or other conditions, which is not limited in the present invention.

For example, a number of target populations is 5. Evolution iteration is performed for each target population. When the evolution iteration termination condition is met, final 5 populations are obtained. A program with the highest fitness value may be selected from the final 5 populations as the target program, or a program with the highest fitness value may be selected from each population, thus taking selected 5 programs as the target program, etc.

It needs to be noted that the above method for selecting the target program is merely an example and the target program may be selected according to actual needs, which is not limited in the present invention.

As an embodiment, the method for generating an adaptive program based on AI according to the embodiments of the present invention may be applied to AI-driven research agents, such as automated algorithm discovery, scientific computing model optimization, etc., may also be applied to automated software development, such as code generation, code optimization, and automatic program repair, or may further be applied to the field of generative AI, such as AI-generated art, complex system design, etc., or other scenarios that require seeking innovative solutions via evolution iteration.

In the embodiments of the present invention, the diversity information of the target population is determined; the temperature parameter is determined according to the diversity information; the first parent program and the second parent program corresponding to the first parent program are selected from the target population according to the temperature parameter; and the target program is obtained by performing the evolution iteration according to the first parent program and the second parent program. In this way, during an evolution iteration process, the temperature parameter may be dynamically adjusted according to the diversity information of the population, which may improve a matching degree between the temperature parameter and program diversity of the population, may thus adaptively select a parent program based on the temperature parameter, may enhance the balance between the exploration and the exploitation in the evolution process, and may consequently efficiently generate diversified and high-performance programs.

FIG. 2 is a flowchart of a method for generating an adaptive program based on AI according to another embodiment of the present invention.

As shown in FIG. 2, the method for generating an adaptive program based on AI includes following steps at S201 to S208.

At S201, a first embedding vector is obtained by performing feature extraction on a first candidate program in the target population.

The first embedding vector may be used to represent a syntax and semantic structure of the first candidate program.

In the present invention, for any one first candidate program in the target population, a large model may be used to extract key features of codes of the first candidate program itself so as to generate the first embedding vector that represents its syntax and semantic structure.

At S202, a conversion result is obtained by performing formal conversion processing on the first candidate program.

For example, the formal conversion process may include, but is not limited to, pseudo-code conversion, structured form conversion, etc. The pseudo-code conversion is used to convert a program code into a pseudo code, and the structured form conversion is used to convert a program into a structured representation.

To further improve the accuracy of a program representation, in some embodiments, code feature information of the first candidate program is obtained by parsing the first candidate program; the first candidate program is converted into a pseudo code describing a functional intention of the first candidate program according to the code feature information; and the conversion result is obtained according to the pseudo code.

For example, the code feature information may include, but is not limited to, a functional intention, an objective, a structure, a control flow, etc., of codes of the first candidate program.

For example, the pseudo code of the first candidate program may be generated according to the code feature information using a large model.

For example, the conversion result may include the pseudo code of the first candidate program, and may also include conversion results in other forms, which is not limited herein.

Thus, by parsing the first candidate program, the first candidate program is converted into the pseudo code based on the parsed code feature information, and feature extraction is performed on the conversion result including the pseudo code, and thus program characteristics may be captured from an abstract logic level.

In some embodiments, a structured representation of the first candidate program may be obtained by parsing the first candidate program, and the conversion result is obtained according to the structured representation.

For example, the structured representation may include, but is not limited to, an abstract syntax tree, a control flow graph, etc.

For example, the conversion result may include the structured representation of the first candidate program, and may also include conversion results in other forms, which is not limited herein.

Thus, by parsing the first candidate program into the structured representation, the program characteristics may be conveniently captured from a structural level.

Optionally, any one of two formal conversion processing methods may be used to perform the formal conversion process on the first candidate program.

Optionally, these two formal conversion processing methods may also be used to perform the formal conversion process on the first candidate program respectively. Then, the conversion result may include the pseudo code, the structured representation, etc., of the first candidate program.

At S203, a second embedding vector is obtained by performing feature extraction on the conversion result.

In the present invention, according to a type of the conversion result, the second embedding vector may be obtained by performing the feature extraction on the conversion result using a corresponding feature extraction method.

In some embodiments, if the conversion result includes the pseudo code of the first candidate program, the second embedding vector may be obtained by performing the feature extraction on the pseudo code. The second embedding vector may be used to represent the program characteristics of the first candidate program at an abstract logic level.

In some embodiments, if the conversion result includes the structured representation of the first candidate program, the second embedding vector may be obtained by performing the feature extraction on the structured representation using a graph neural network (GNN). The second embedding vector may be used to represent the program characteristics of the first candidate program at a structural level.

In some embodiments, if the conversion result includes the pseudo code and the structured representation of the first candidate program, the feature extraction may be performed on the pseudo code and the structured representation respectively, and the second embedding vector is obtained by fusing extracted feature vectors.

At S204, a fused representation vector is obtained by fusing the first embedding vector and the second embedding vector.

In the present invention, the fused representation vector of the first candidate program may be obtained by fusing the first embedding vector and the second embedding vector via concatenation or weighted averaging.

For example, if the second embedding vector is obtained by performing the feature extraction on the pseudo code of the first candidate program, a fused representation vector capable of reflecting both a program code level and a functional intention level may be obtained by fusing the first embedding vector and the second embedding vector.

At S205, the diversity information is obtained according to the fused representation vector.

In the present invention, according to a fused representation vector of each two first candidate program in the target population, a cosine distance between each two first candidate programs may be determined; an average cosine distance among the first candidate programs in the target population is determined according to an average of all cosine distances between each two first candidate programs in the target population; and the diversity information of the target population is obtained according to the average cosine distance. Thus, by calculating the average cosine distance among the first candidate programs based on the fused representation vector between each two first candidate programs, the accuracy of the calculation may be improved, and the accuracy of the diversity information may be further improved.

A larger average cosine distance may indicate higher program diversity in the target population.

For example, the average cosine distance may be used as a diversity index, and the diversity information is obtained according to the diversity index. The diversity index may be a value and may be used to represent a level (high/low) of the program diversity of the target population.

To further enhance the robustness of measurement, for example, an auxiliary feature of the target population may be obtained, and the diversity index is obtained by fusing the average cosine distance and the auxiliary feature. The diversity index may be a composite function reflecting a distribution situation indicated by a core metric/measure and a supplementary metric/measure. For example, a weighted combination method may be adopted, thus obtaining a multi-dimensional, high-fidelity diversity index.

For example, the auxiliary feature may include, but is not limited to, a code length of the first candidate program, a fitness value of the first candidate program, or an average edit distance between the first candidate programs, etc.

For example, an edit distance between each two first candidate programs in the target population may be calculated, and the average edit distance among the first candidate programs in the target population is determined according to an average of all edit distances between each two first candidate programs in the target population.

The edit distance between each two first candidate programs may be used to measure a difference between two first candidate program codes.

Therefore, multi-dimensional representation is performed on the program according to the average cosine distance, in combination with the code length, the fitness value, or the average edit distance of the program introduced, which may improve the accuracy and robustness of diversity measurement.

At S206, a temperature parameter is determined according to the diversity information.

At S207, a first parent program and a second parent program corresponding to the first parent program are selected from the target population according to the temperature parameter.

In the embodiments of the present invention, for details of S206 to S207, reference may be made to any implementation in the embodiments of the present invention, and details are not repeated here.

At S208, a target program is obtained by performing an evolution iteration according to the first parent program and the second parent program.

In some embodiments, a child program is generated by performing crossover and mutation operations on the first parent program and the second parent program by using a large model, and the target program is obtained by performing the evolution iteration according to the child program. For a process of performing the evolution iteration according to the child program, reference may be made to the above embodiments, and details are not repeated here.

For example, a prompt template may be obtained, in which the prompt template may include program generation task information. Prompt information is obtained by filling the prompt template according to the first parent program and the second parent program; and the child program is generated by performing the crossover and mutation operations according to the prompt information using the large model.

The program generation task information instructs the large model to execute a program generation task.

For example, the program generation task information may include, but is not limited to, a program generation task, a program generation requirement, etc.

For example, the prompt template may further include a program output requirement, a program generation example/instance, etc. The program output requirement may include an output format requirement, an output program quantity requirement, etc.

For example, the prompt information may be "Please analyze advantages and disadvantages of these two programs, and combine them to create a new program with better performance".

Therefore, a new child program is generated by performing the crossover and mutation operations on the selected parent program using the large model, so that a mutation direction may be controlled, a quality of the child program may be improved, and the efficiency of the evolution iteration may be increased.

In the embodiments of the present invention, the first embedding vector representing the syntax and semantic structure of the first candidate program is obtained by performing the feature extraction on the first candidate program in the target population; the conversion result is obtained by performing the formal conversion processing on the first candidate program; embedding vectors corresponding to other program forms are obtained by performing the feature extraction on the conversion result; and a representation vector integrating a plurality of dimensions may be obtained by fusing two types of embedding vectors, thus improving the accuracy of program representation.

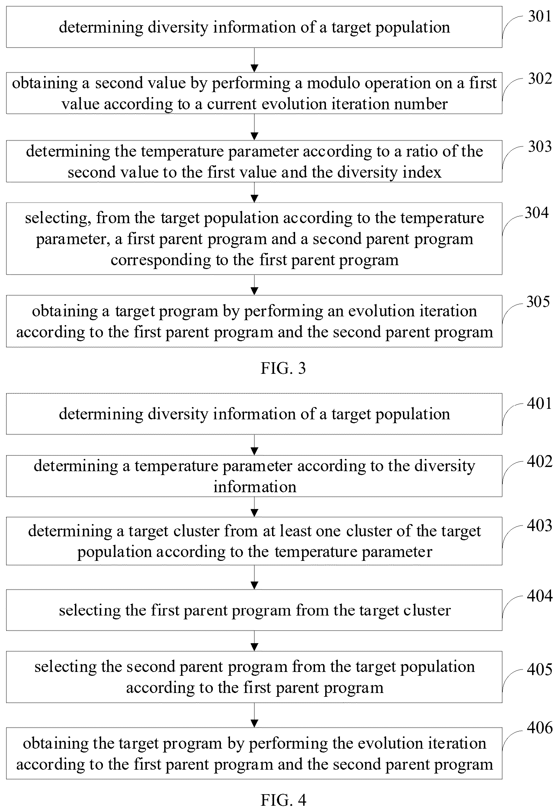

FIG. 3 is a flowchart of a method for generating an adaptive program based on AI according to another embodiment of the present invention.

As shown in FIG. 3, the method for generating an adaptive program based on AI includes following steps at S301 to S305.

At S301, diversity information of a target population is determined.

In the embodiments of the present invention, for details of S301, reference may be made to any implementation in the embodiments of the present invention, and details are not repeated here.

At S302, a second value is obtained by performing a modulo operation on a first value according to a current evolution iteration number.

A difference between the first value and a total evolution iteration number may be greater than a preset threshold. It may be considered that the first value is a hyper-parameter that is much greater than the total evolution iteration number.

**At** S303, the temperature parameter is determined according to a ratio of the second value to the first value and the diversity index.

In the related art, the temperature parameter is usually determined only according to an evolution iteration number. However, when the population diversity is relatively low, it may not be possible to increase the search intensity in time; and when the diversity is high, a current high-fitness individual is not fully utilized, resulting in a poor capability to balance the exploration and the exploitation.

In view of the above problem, in the present invention, the diversity information of the target population may include a diversity index of the target population. The temperature parameter may be determined according to the ratio between the second value and the first value in combination with the diversity index.

In some embodiments, a first difference between a target value and the diversity index is determined; a fourth value is determined, in which a base of the fourth value is a third value and an exponent of the fourth value is the first difference; a second difference between the target value and the ratio is determined; and the temperature parameter is determined according to a product of the second difference and the fourth value.

For example, the target value may be equal to 1, or may also be another value, which is not limited herein.

For example, the first difference may be obtained by subtracting the diversity index from the target value.

For example, the third value may be a value greater than 1.

For example, the product of the second difference and the fourth value may be taken as the temperature parameter.

To further improve the accuracy of the temperature parameter, for example, an initial temperature value for controlling selection randomness may be set, and a product of the initial temperature value for controlling selection randomness, the second difference, and the fourth value may be taken as the temperature parameter.

As an example, taking an example that the target value is 1 and the base (that is, the third value) is $e$, the following formula (1) may be used to calculate the temperature parameter of the target population:

$$T = T_0 \times \left( 1 - \frac{n\,mod\,N}{N} \right) \times exp(1 - diverity) \quad (1)$$

$T$ represents the temperature parameter; $T_0$ represents the initial temperature value for controlling selection randomness; $n$ represents the current evolution iteration number; $N$ represents the first value to smooth an evolution process; $n\,mod\,N$ represents performing the modulo operation on the first value $N$ according to the current evolution iteration number $n$; and *diverity* represents the diversity index of the target population.

In the above formula (1), the term $\left( 1 - \frac{n\,mod\,N}{N} \right)$ simulates the annealing process. As the evolution iteration number $n$ increases, its value is from 1 gradually to 0, naturally favoring exploitation in a later stage of evolution. For the term *expi*(1 - *diverity*), when the population diversity is high and its value decreases, the temperature parameter is decreased to promote exploitation. When the diversity is low, its value increases, the temperature parameter is increased to enhance randomness and promote exploration, thus effectively breaking premature convergence.

Therefore, while the temperature parameter decays with the increase of the evolution iteration number, the temperature parameter is dynamically adjusted according to the diversity index via an exponential function. This allows for reducing the temperature parameter to promote exploitation when the diversity is high, and raising the temperature parameter to promote exploration when the diversity is low, thus achieving a dynamic balance between the exploration and the exploitation in the evolution process.

At S304, a first parent program and a second parent program corresponding to the first parent program are selected from the target population according to the temperature parameter.

At S305, a target program is obtained by performing an evolution iteration according to the first parent program and the second parent program.

In the embodiments of the present invention, for details of S304 to S305, reference may be made to any implementation in the embodiments of the present invention, and details are not repeated here.

In the embodiments of the present invention, the second value is obtained by performing the modulo operation on the first value according to the current evolution iteration number; the temperature parameter is determined according to the ratio of the second value obtained from the modulo operation to the first value (which is much greater than the total evolution iteration number), and the diversity index of the target population. Therefore, the temperature parameter is determined using the ratio in combination with the diversity index of the target population, which not only enables the temperature parameter to decay with the increase of the evolution iteration number and enables a later stage of selection to favor exploitation, but also improves the adaptability of the temperature parameter by adjusting the temperature parameter with the diversity index of the target population and enhances the capability to balance the exploration and the exploitation during the evolution process.

FIG. 4 is a flowchart of a method for generating an adaptive program based on AI according to another embodiment of the present invention.

As shown in FIG. 4, the method for generating an adaptive program based on AI includes following steps at S401 to S406.

At S401, diversity information of a target population is determined.

At S402, a temperature parameter is determined according to the diversity information.

In the embodiments of the present invention, for details of S401 to S402, reference may be made to any implementation in the embodiments of the present invention, and details are not repeated here.

At S403, a target cluster from at least one cluster of the target population is determined according to the temperature parameter.

In the embodiments of the present invention, the target population may include at least one cluster, and each cluster may include at least one program. In addition, for ease of distinction, programs belonging to one cluster may be referred to as second candidate programs.

In some embodiments, for any cluster in the at least one cluster, a performance score of the any cluster may be determined; and the target cluster is selected from the at least one cluster of the target cluster according to performance scores of the at least one cluster.

The performance score of the any cluster may be used to measure a relationship between the program quality and the cluster scale of the any cluster.

For example, a performance score of the any cluster may be determined according to fitness values of second candidate programs in the any cluster and a quantity of the second candidate programs in the any cluster; a selection probability of the any cluster is determined according to the temperature parameter and the performance score; and the target cluster is selected from the at least one cluster according to selection probabilities of the at least one cluster in the target population.

For example, an average fitness value of the second candidate programs in the any cluster may be calculated according to the fitness values of the second candidate programs in the any cluster, and a ratio of the average fitness value to the quantity of the second candidate programs in the any cluster may be determined as the performance score.

For example, a maximum fitness value among the fitness values of the second candidate programs may be determined; and the performance score is determined according to a ratio of the maximum fitness value to the quantity of the second candidate programs. For example, the ratio between the maximum fitness value and the quantity of the second candidate programs may be determined as the performance score.

As an example, a performance score of each cluster may be calculated according to the following formula (2):

$$s_i = \frac{\max\limits_{\{p \in cluster_i\}}(score(p))}{size(cluster_i)} \quad (2)$$

$s_i$ represents a performance score of $cluster_i$; $score(p)$ represents a fitness value of the second candidate program $p$ in the $cluster_i$; and $size(cluster_i)$ represents a size of $cluster_i$, that is, a quantity of second candidate programs in the $cluster_i$.

Therefore, not only selection of a cluster including high-performance programs is promoted via the numerator (i.e., a maximum fitness value), but also monopoly of the large cluster is avoided via the denominator (i.e., a quantity of second candidate programs) and opportunities are provided for small clusters representing novel directions, which may achieve a purpose of selecting a cluster that has been explored for less times and has a high performance score.

For example, according to the temperature parameter and the performance score, the selection probability of the any cluster may be determined via an exponential function.

As an example, a selection probability of each cluster may be calculated using the following formula (3):

$$P(cluster_i) = \frac{\exp(s_i/T)}{\sum_j \exp(s_j/T)} \quad (3)$$

$P(cluster_i)$ represents a selection probability of $cluster_i$; $s_i$ represents a performance score of $cluster_i$; $s_j$ represents a performance score of $cluster_j$; and $T$ represents a temperature parameter to adjust a selection pressure. In the formula (3), when a value of $T$ is high, probability distribution tends to be uniform, exploration is promoted; and when a value of $T$ is low, probability distribution tends to be concentrated, exploitation is promoted.

Therefore, the performance score of the cluster is determined according to the fitness values of the second candidate programs in the any cluster and the quantity of the second candidate programs in the cluster; and the selection probability of the cluster is determined according to the temperature parameter and the performance score, so that the selection pressure of the cluster may be dynamically adjusted according to the temperature parameter, thus achieving adaptive selection of the cluster.

At S404, the first parent program is selected from the target cluster.

In the embodiments of the present invention, the second candidate programs in the target cluster may be sorted in a descending order according to their fitness values, and a preset number of the second candidate programs at the top may be determined as the first parent programs. Thus, programs with a relatively high quality may be selected for generating child programs, and the quality of the program in the population may be continuously improved via evolution iteration.

For example, a second candidate program with the highest fitness value in the target cluster may be taken as the first parent program.

For example, there may be one or a plurality of target clusters. If there are a plurality of target clusters, for each target cluster, a first parent program may be selected from the target cluster. It may be seen that there may be one or a plurality of first parent programs, which is not limited herein.

**At** S405, the second parent program is selected from the target population according to the first parent program.

In order to continuously improve the quality of the program in the population, in the embodiments of the present invention, for any one first parent program, the target population to which the first parent program belongs may be taken as a candidate pool, and a program suitable for crossover or mutation with the first parent program is selected from the target population.

In some embodiments, for any one first candidate program in the target population, a cosine distance may be calculated according to a fused representation vector of the first parent program and a fused representation vector of the first candidate program; a difference degree between the first parent program and the first candidate program is determined according to the cosine distance; and a first candidate program in the target population with a greatest difference degree from the first parent program is taken as the second parent program. A larger cosine distance between programs indicates a greater difference degree between the programs.

Furthermore, for the method for obtaining the fused representation vector of the first parent program, reference may be made to the method for obtaining the fused representation vector of the first candidate program in the above embodiments, and details are not repeated here.

In some embodiments, the diversity information of the target population may include a diversity index. For any one first candidate program in the target population, a difference degree between the first parent program and a first candidate program in the target population may also be determined according to a fused representation vector of the first parent program and a fused representation vector of the first candidate program; a first weight of a fitness value of the first candidate program and a second weight of the difference degree are determined according to the diversity index of the target population; a comprehensive score of the first candidate program is obtained by weighting the fitness value of the first candidate program and the difference degree according to the first weight and the second weight; and the second parent program is selected from the target population according to the comprehensive score.

The comprehensive score of the first candidate program may be used to represent comprehensive information of the first candidate program in terms of the quality and its difference degree from the first parent program.

For example, a normalized index may be obtained by performing normalization on the diversity index; the normalized index is determined as the first weight; and a difference between a target value and the normalized index is determined as the second weight.

For example, the following method may be used to normalize the diversity index: a ratio of the diversity index to a score threshold may be determined, and a minimum value between the ratio and the target value is taken as the normalized index.

For example, if the score threshold is $t$ and the target value is 1, the normalized

$$diversity' = min(\frac{diversity}{t}, 1).$$

As an example, the comprehensive score of the first candidate program may be calculated using the following

formula (4):

$$f_i = score(p_i) \times diversity' + cosine(p_i, parent_1) \times (1 - diversity') \quad (4)$$

$f_i$ represents a comprehensive score of a first candidate program $p_i$; *diversity'* represents the normalized index; $score(p_i)$ represents a fitness value of the first candidate program $p_i$; and $cosine(p_i, parent_1)$ represents a difference degree between the first candidate program $p_i$ and a first parent program *parent$_1$*.

Therefore, when the population diversity is high, a weight of the fitness value is relatively large, a high-performance individual tends to be selected for exploitation. When the diversity is low, a weight of the difference degree is relatively large, a first candidate program that is significantly different from the first parent program tends to be selected, so as to introduce new genes and promote the exploration, thus enhancing the capability to balance the exploration and the exploitation.

For example, selecting the second parent program from the target population according to the comprehensive score may be implemented in the following manner: determining a selection probability of any first candidate program according to a comprehensive score of the any first candidate program and a sum of comprehensive scores of all first candidate programs in the target population; and selecting the second parent program from the target population according to a selection probability of each first candidate program in the target population.

For example, if there are a plurality of first parent programs, the above solution may be used to select a second parent program for each first parent program.

Thus, the first weight of the fitness value of the first candidate program and the weight of the difference degree between the first parent program and the first candidate program are determined according to the diversity index, and the comprehensive score is determined dynamically via weighting, and the second parent program is selected based on the comprehensive score, which may achieve that a second parent program suitable for crossover or mutation is selected for the first parent program.

**At** S406, the target program is obtained by performing the evolution iteration according to the first parent program and the second parent program.

In the embodiments of the present invention, S406 may adopt any implementation in the embodiments of the present invention, and thus will not be repeated here.

In some embodiments, crossover and mutation operations may be performed on the first parent program and the second parent program to generate a child program, a cluster to which the child program belongs in the target population is determined, and the child program is placed into the cluster to replace a program with a low fitness value in the target population, thus completing population update and obtaining a new population. If an evolution iteration termination condition is not met, the new population may be taken as the target population for a next evolution iteration until the evolution iteration termination condition is met, so that a final population is obtained and the target program is selected from the final population. A method for generating a child program may be referred to other embodiments and will not be repeated here.

For example, after each generation of the child program, it is determined whether a re-clustering condition is met. If the re-clustering condition is not met, a nearest cluster to the child program in the target population is determined, and the child program is placed into the cluster to replace the program with the low fitness value in the target population so as to obtain a new population. If the re-clustering condition is met, the program with the low fitness value in the target population is removed, and re-clustering is performed on the child program and remaining programs in the target population so as to obtain at least one new cluster, thus completing population update and obtaining a new population.

For example, the re-clustering condition may be that a number of child programs (that are generated from a moment at the latest re-clustering to a current moment) reaches a preset number, or may be that an evolution iteration number reaches a preset number, or may be other conditions, which is not limited herein.

**In** the embodiments of the present invention, the target cluster is adaptively selected from at least one cluster of the target population according to the temperature parameter and the first parent program is selected from the target cluster, which may ensure the quality of the first parent program; and the second parent program is selected according to the first parent program, which may improve the quality of the second parent program; and the new child program is generated according to the first parent program and the second parent program, which may improve the quality of the child program.

The method for generating an adaptive program based on AI in the embodiments of the present invention may be widely applied to a field that requires generating a solution via evolution. The following uses automated algorithm discovery as an example for description.

Scenario description: it is expected to automatically discover a new and efficient algorithm for a specific problem (such as community discovery on large-scale graph data).

Application process:

Initialization: an objective function of the problem, i.e., a score function, is defined by a researcher. For example, scoring is performed according to a modularity Q of the algorithm and computational efficiency. First, a batch of initial community discovery algorithm programs are generated randomly or by a large model as an initial population.

Evolution iteration starts:

Evaluation and representation: a score for each population is calculated, a fused representation vector for each program is generated, and simultaneously, a diversity index of the each population is calculated.

Selection: a first parent program is independently selected from each population, and a plurality of pairs (first parent program and second parent program) are selected.

Generation: a code and analysis of each pair (first parent program and second parent program) are input into a large model, and prompt information is used to make them perform "crossover" and "mutation" so as to generate a new child program. For example, the prompt information may be: "Please analyze advantages and disadvantages of these two programs, and combine them to create a new program with a good performance".

Replacement and migration: the newly-generated child program is put back into the population to replace the program with the low fitness value in the population. In addition, individual migration may be periodically performed between populations, that is, an individual with the highest fitness value in one population is migrated to another population so as to promote gene exchange.

Termination: evolution iteration proceeds until a termination condition is met (for example, reaching a predetermined number of generations, or finding a solution that meets performance requirements).

Final output: a series of high-performance and diverse community discovery algorithms may be selected from the finally obtained population for the researcher to choose and analyze.

**In** the field of autonomous driving policy optimization, the solution of the embodiments of the present invention may be applied to generate logic programs for controlling vehicles to avoid obstacles and for path planning via evolution iteration, and the objective function may be safety, smoothness, and traffic efficiency in a simulation environment.

In the field of game AI design, the solution of the embodiments of the present invention may be applied to generate a decision tree or a state machine program for controlling behaviors of non-player characters (NPCs) in a game via evolution iteration, and the objective function may be a win rate in confrontations with players or other AIs.

Furthermore, the solution of the embodiments of the present invention may also be extended to the field of a drug molecular design, generating chemical formulas or structures of molecules via evolution iteration, and the objective function may be its binding energy with a target, etc.

The method for generating an adaptive program based on AI in the embodiments of the present invention has following beneficial effects.

**(1)** Enhancing an upper limit of problem solving: by effectively avoiding premature convergence, there is a greater chance to jump out of local optimum and discover truly breakthrough and novel solutions that may be not envisaged by human experts.

(2) Accelerating innovation efficiency: an adaptive selection strategy intelligently allocates computing resources to most promising evolution directions, and, whether exploring new areas or deepening advantageous regions, the strategy is more efficient than fixed strategies and shortens a development cycle of the second parent program.

**(3)** Enhancing the diversity of results: precise diversity metrics and maintenance mechanism may ensure that the final output is high-quality solutions that are varied in style, which provides users with a rich selection space.

(4) Improving a level of automation: adaptive characteristics reduce the dependence on manual parameter tuning (for example, temperature annealing rate), which improves the robustness and automation of evolution iteration.

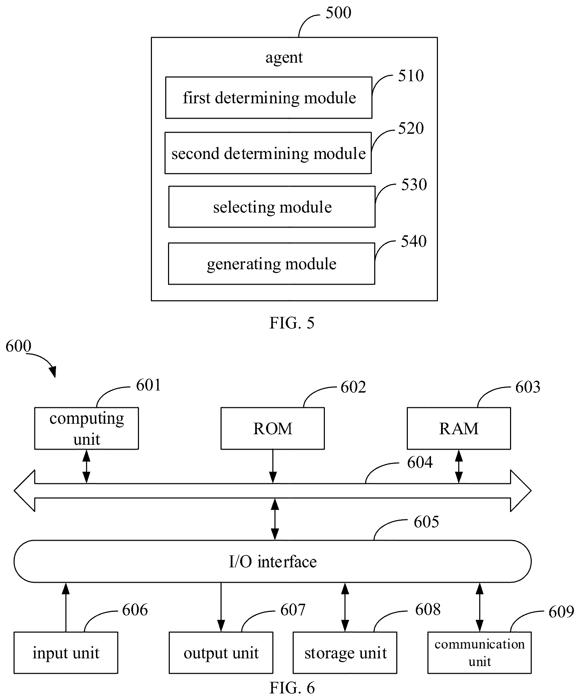

To implement the above embodiments, the embodiments of the present invention also provide an agent. FIG. 5 is a block diagram of an agent according to an embodiment of the present invention.

As shown in FIG. 5, the agent 500 includes: a first determining module 510, configured to determine diversity information of a target population, in which the diversity information indicates program diversity of the target population; a second determining module 520, configured to determine a temperature parameter according to the diversity information, in which the temperature parameter is used to adjust a selection pressure; a selecting module 530, configured to select, from the target population according to the temperature parameter, a first parent program and a second parent program corresponding to the first parent program; and a generating module, configured to obtain a target program by performing an evolution iteration according to the first parent program and the second parent program.

Optionally, the first determining module 510 is configured to: obtain a first embedding vector by performing feature extraction on a first candidate program in the target population, in which the first embedding vector is used to represent a syntax and semantic structure of the first candidate program; obtain a conversion result by performing formal conversion processing on the first candidate program; obtain a second embedding vector by performing feature extraction on the conversion result; obtain a fused representation vector by fusing the first embedding vector and the second embedding vector; and obtain the diversity information according to the fused representation vector.

Optionally, the first determining module 510 is configured to: determine an average cosine distance between the first candidate programs according to the fused representation vector; and obtain the diversity information according to the average cosine distance.

Optionally, the diversity information includes a diversity index, and the first determining module 510 is configured to: obtain an auxiliary feature of the target population, in which the auxiliary feature includes at least one of: a code length of the first candidate program, a fitness value of the first candidate program, or an average edit distance between the first candidate programs; and obtain the diversity index by fusing the average cosine distance and the auxiliary feature.

Optionally, the first determining module 510 is configured to: obtain code feature information of the first candidate program by parsing the first candidate program; obtain a pseudo code of the first candidate program according to the code feature information; and obtain the conversion result according to the pseudo code.

Optionally, the first determining module 510 is configured to: obtain a structured representation of the first candidate program by parsing the first candidate program; and obtain the conversion result according to the structured representation.

Optionally, the diversity information includes a diversity index, and the second determining module 520 is configured to: obtain a second value by performing a modulo operation on a first value according to a current evolution iteration number, in which a difference between the first value and a total evolution iteration number is greater than a preset threshold; and determine the temperature parameter according to a ratio of the second value to the first value and the diversity index.

Optionally, the second determining module 520 is configured to: determine a first difference between a target value and the diversity index; determine a fourth value with a base being a third value and an exponent being the first difference; determine a second difference between the target value and the ratio; and determine the temperature parameter according to a product of the second difference and the fourth value.

Optionally, the selecting module 530 is configured to: determine a target cluster from at least one cluster of the target population according to the temperature parameter; select the first parent program from the target cluster; and select the second parent program from the target population according to the first parent program.

Optionally, the selecting module 530 is configured to: for any cluster in the at least one cluster, determine a performance score of the any cluster according to fitness values of second candidate programs in the any cluster and a quantity of the second candidate programs in the any cluster, in which the performance score is used to measure a relationship between a program quality and cluster scale of the any cluster; determine a selection probability of the any cluster according to the temperature parameter and the performance score; and select the target cluster from the at least one cluster according to the selection probability.

Optionally, the selecting module 530 is configured to: determine a maximum fitness value among the fitness values of the second candidate programs; and determine the performance score according to a ratio of the maximum fitness value to the quantity of the second candidate programs.

Optionally, the diversity information includes a diversity index, and the selecting module 530 is configured to: determine a difference degree between the first parent program and a first candidate program in the target population according to a fused representation vector of the first parent program and a fused representation vector of the first candidate program; determine a first weight of a fitness value of the first candidate program and a second weight of the difference degree according to the diversity index; obtain a comprehensive score of the first candidate program by weighting the fitness value of the first candidate program and the difference degree according to the first weight and the second weight; and select the second parent program from the target population according to the comprehensive score.

Optionally, the selecting module 530 is configured to: obtain a normalized index by performing normalization on the diversity index; determine the normalized index as the first weight; and determine a difference between a target value and the normalized index as the second weight.

Optionally, the generating module 540 is configured to: generate a child program by performing crossover and mutation operations on the first parent program and the second parent program by using a large model; and obtain the target program by performing the evolution iteration according to the child program.

It needs to be noted that explanations of the embodiments of the above method for generating a program also apply to the agent in the embodiments, which are not repeated here.

In the embodiments of the present invention, the diversity information of the target population is determined; the temperature parameter is determined according to the diversity information; the first parent program and the second parent program corresponding to the first parent program are selected from the target population according to the temperature parameter; and the target program is obtained by performing the evolution iteration according to the first parent program and the second parent program. In this way, during an evolution iteration process, the temperature parameter may be dynamically adjusted according to the diversity information of the population, which may improve a matching degree between the temperature parameter and program diversity of the population, may thus adaptively select a parent program based on the temperature parameter, may enhance the balance between the exploration and the exploitation in the evolution process, and may consequently efficiently generate diversified and high-performance programs.

According to the embodiments of the present invention, the present invention also provides an electronic device, a readable storage medium, and a computer program product.

FIG. 6 is a schematic block diagram of an exemplary electronic device 600 that may be used to implement the embodiments of the present invention. The electronic device is intended to represent various types of digital computers, such as laptop computers, desktop computers, workstations, personal digital assistants, servers, blade servers, mainframe computers, and other suitable computers. The electronic device may also represent various types of mobile devices, such as personal digital assistants, cellular phones, smart phones, wearable devices, and other similar computing devices. The components shown herein, their connections and relations, and their functions are merely examples, which are not intended to limit the implementations of the invention described and/or required herein.

As shown in FIG. 6, the device 600 includes a computing unit 601, configured to execute various appropriate actions and processes according to a computer program stored in a read-only memory (ROM) 602 or a computer program loaded from a storage unit 608 to a random access memory (RAM) 603. The RAM 603 may store various programs and data required for an operation of the device 600. The computing unit 601, the ROM 602 and the RAM 603 may be connected with each other via buses 604. An input/output (I/O) interface 605 is also connected to the bus 604.

The plurality of components in the device 600 are connected to the I/O interface 605, which include: an input unit 606, for example, a keyboard, a mouse; an output unit 607, for example, various types of displays, speakers; a storage unit 608, for example, a magnetic disk, an optical disk; and a communication unit 609, for example, a network card, a modem, a wireless transceiver. The communication unit 609 allows the device 600 to exchange information/data through a computer network such as Internet and/or various types of telecommunication networks with other devices.

The computing unit 601 may be various types of general and/or dedicated processing components with processing and computing abilities. Some examples of the computing unit 601 include but not limited to a central processing unit (CPU), a graphics processing unit (GPU), various dedicated AI computing chips, various computing units on which a machine learning model algorithm is running, a digital signal processor (DSP), and any appropriate processor, controller, microcontroller, etc. The computing unit 601 executes various methods and processes as described above, for example, a method for generating an adaptive program based on AI. For example, in some embodiments, the method for generating an adaptive program based on AI may be further implemented as a computer software program, which is tangibly included in a machine readable medium, such as the storage unit 608. In some embodiments, a part or all of the computer program may be loaded and/or installed on the device 600 via the ROM 602 and/or the communication unit 609. When the computer program is loaded on the RAM 603 and executed by the computing unit 601, one or more steps in the method for generating an adaptive program based on AI may be performed as described above. Optionally, in other embodiments, the computing unit 601 may be configured to implement the method for generating an adaptive program based on AI in other appropriate ways (for example, by means of a firmware).

Various implementations of the systems and techniques described above may be implemented by one and/or a combination of a digital electronic circuit system, an integrated circuit system, a field-programmable gate array (FPGA), an application specific integrated circuit (ASIC), an application specific standard product (ASSP), a system on chip (SoC), a complex programmable logic device (CPLD), computer hardware, firmware, and software. These various embodiments may be implemented in one or more computer programs, in which the one or more computer programs may be executed and/or interpreted on a programmable system including at least one programmable processor. The programmable processor may be a dedicated or general programmable processor for receiving data and instructions from a storage system, at least one input device and at least one output device, and transmitting the data and the instructions to the storage system, the at least one input device and the at least one output device.

The program code configured to implement the method of the invention may be written in any combination of one or more programming languages. These program codes may be provided for processors or controllers of general-purpose computers, dedicated computers, or other programmable data processing devices, so that the program codes, when executed by the processors or the controllers, enable the functions/operations specified in the flowcharts and/or the block diagrams to be performed. The program code may be entirely executed on a machine, partly executed on a machine, partly executed on a machine and partly executed on a remote machine as an independent software package, or entirely executed on a remote machine or a server.

In the context of the invention, a machine-readable medium may be a tangible medium that may include or store a program for use by or in combination with an instruction execution system, apparatus, or device. The machine-readable medium may be a machine-readable signal medium or a machine-readable storage medium. The machine-readable medium may include, but is not limited to, an electronic, magnetic, optical, electromagnetic, infrared, or semiconductor system, apparatus, or device, or any suitable combination of the foregoing. More specific examples of machine-readable storage media include electrical connections based on one or more wires, portable computer disks, hard disks, RAMs, ROMs, electrically programmable read-only memories (EPROMs), flash memories, fiber optics, compact disc read-only memories (CD-ROMs), optical storage devices, magnetic storage devices, or any suitable combination of the foregoing.

In order to provide interaction with a user, the systems and techniques described herein may be implemented on a computer having a display device (e.g., a cathode ray tube (CRT) or a liquid crystal display (LCD) monitor) for displaying information to a user; and a keyboard and a pointing device (such as a mouse or trackball) via which the user may provide input to the computer. Other kinds of devices may also be used to provide interaction with the user. For example, the feedback provided to the user may be any form of sensory feedback (e.g., visual feedback, auditory feedback, or haptic feedback), and the input from the user may be received in any form (including acoustic input, voice input, or haptic input).

The systems and technologies described herein may be implemented in a computing system that includes background components (e.g., a data server), or a computing system that includes middleware components (e.g., an application server), or a computing system that includes front-end components (e.g., a user computer with a graphical user interface or a web browser, through which the user may interact with the implementations of the systems and technologies described herein), or may include any combination of the background components, the middleware components, and the front-end components. The components of the system may be interconnected by any form or medium of digital data communication (e.g., a communication network). Examples of the communication network include: a local area network (LAN), a wide area network (WAN), the Internet, and a blockchain network.

The computer system may include a client and a server. The client and server are generally remote from each other and interacting through a communication network. A relationship between the client and the server is generated by computer programs running on corresponding computers and having a client-server relation with each other. The server may be a cloud server, also known as a cloud computing server or a cloud host. It is a host product in a cloud computing service system, aiming to address problems of high management difficulty and weak service scalability in traditional physical hosts and virtual private server (VPS) services. The server may also be a server of a distributed system, or a server combined with a block-chain.

According to the embodiments of the present invention, the present invention also provides a computer program product. When instructions in the computer program product are executed, the method for generating an adaptive program based on AI provided in the above embodiments of the present invention is implemented.

It may be understood that various forms of processes shown above may be used to reorder, add or delete steps. For example, the steps described in the invention could be performed in parallel, sequentially, or in a different order, as long as the desired result of the technical solution disclosed in the invention is achieved, which is not limited herein.

The above specific embodiments do not constitute a limitation on the protection scope of the invention.

## Claims

1. A method for generating an adaptive program based on artificial intelligence, AI, performed by an agent in an electronic device, the method comprising:

   determining (101, 301, 401) diversity information of a target population, wherein the diversity information indicates program diversity of the target population;
   determining (102, 206, 402) a temperature parameter according to the diversity information, wherein the temperature parameter is used to adjust a selection pressure;
   selecting (103, 207, 304), from the target population according to the temperature parameter, a first parent program and a second parent program corresponding to the first parent program; and
   obtaining (104, 208, 305, 406) a target program by performing an evolution iteration according to the first parent program and the second parent program.

2. The method of claim 1, wherein determining the diversity information of the target population comprises:

   obtaining (201) a first embedding vector by performing feature extraction on a first candidate program in the target population, wherein the first embedding vector is used to represent a syntax and semantic structure of the first candidate program;
   obtaining (202) a conversion result by performing formal conversion processing on the first candidate program;
   obtaining (203) a second embedding vector by performing feature extraction on the conversion result;
   obtaining (204) a fused representation vector by fusing the first embedding vector and the second embedding vector; and
   obtaining (205) the diversity information according to the fused representation vector.

3. The method of claim 2, wherein obtaining the diversity information according to the fused representation vector comprises:

> determining an average cosine distance between the first candidate programs according to the fused representation vector; and
> obtaining the diversity information according to the average cosine distance.

4. The method of claim 3, wherein the diversity information comprises a diversity index, and obtaining the diversity information according to the average cosine distance comprises:

> obtaining an auxiliary feature of the target population, wherein the auxiliary feature comprises at least one of: a code length of the first candidate program, a fitness value of the first candidate program, or an average edit distance between the first candidate programs; and
> obtaining the diversity index by fusing the average cosine distance and the auxiliary feature.

5. The method of one of claims 2 to 4, wherein obtaining the conversion result by performing the formal conversion processing on the first candidate program comprises one of:

> obtaining code feature information of the first candidate program by parsing the first candidate program; obtaining a pseudo code of the first candidate program according to the code feature information; and obtaining the conversion result according to the pseudo code;
> or
> obtaining a structured representation of the first candidate program by parsing the first candidate program; and obtaining the conversion result according to the structured representation.

6. The method of one of claims 1 to 5, wherein the diversity information comprises a diversity index, and determining the temperature parameter according to the diversity information comprises:

> obtaining (302) a second value by performing a modulo operation on a first value according to a current evolution iteration number, wherein a difference between the first value and a total evolution iteration number is greater than a preset threshold; and
> determining (303) the temperature parameter according to a ratio of the second value to the first value and the diversity index.

7. The method of claim 6, wherein determining the temperature parameter according to the ratio of the second value to the first value and the diversity index comprises:

> determining a first difference between a target value and the diversity index;
> determining a fourth value with a base being a third value and an exponent being the first difference;
> determining a second difference between the target value and the ratio; and
> determining the temperature parameter according to a product of the second difference and the fourth value.

8. The method of one of claims 1 to 7, wherein selecting, from the target population according to the temperature parameter, the first parent program and the second parent program corresponding to the first parent program comprises:

> determining a target cluster (403) from at least one cluster of the target population according to the temperature parameter;
> selecting (404) the first parent program from the target cluster; and
> selecting (405) the second parent program from the target population according to the first parent program.

9. The method of claim 8, wherein determining the target cluster from the at least one cluster of the target population according to the temperature parameter comprises:

> for any cluster in the at least one cluster, determining a performance score of the any cluster according to fitness values of second candidate programs in the any cluster and a quantity of the second candidate programs in the any cluster, wherein the performance score is used to measure a relationship between a program quality of the any cluster and a cluster scale of the any cluster;

determining a selection probability of the any cluster according to the temperature parameter and the performance score; and
selecting the target cluster from the at least one cluster according to the selection probability.

10. The method of claim 9, wherein determining the performance score of the any cluster according to the fitness values of the second candidate programs in the any cluster and the quantity of the second candidate programs in the any cluster comprises:

determining a maximum fitness value among the fitness values of the second candidate programs; and
determining the performance score according to a ratio of the maximum fitness value to the quantity of the second candidate programs.

11. The method of one of claims 8 to 10, wherein the diversity information comprises a diversity index, and selecting the second parent program from the target population according to the first parent program comprises:

determining a difference degree between the first parent program and a first candidate program in the target population according to a fused representation vector of the first parent program and a fused representation vector of the first candidate program;
determining a first weight of a fitness value of the first candidate program and a second weight of the difference degree according to the diversity index;
obtaining a comprehensive score of the first candidate program by weighting the fitness value of the first candidate program and the difference degree according to the first weight and the second weight; and
selecting the second parent program from the target population according to the comprehensive score.

12. The method of claim 11, wherein determining the first weight of the fitness value of the first candidate program and the second weight of the difference degree according to the diversity index comprises:

obtaining a normalized index by performing normalization on the diversity index;
determining the normalized index as the first weight; and
determining a difference between a target value and the normalized index as the second weight.

13. The method of any one of claims 1 to 12, wherein obtaining the target program by performing the evolution iteration according to the first parent program and the second parent program comprises:

generating a child program by performing crossover and mutation operations on the first parent program and the second parent program by using a large model; and
obtaining the target program by performing the evolution iteration according to the child program.

14. An agent (500) in an electronic device (600), comprising:

at least one processor; and
a memory communicatively coupled to the at least one processor, wherein
the memory stores instructions executable by the at least one processor, and the instructions, when executed by the at least one processor, cause the at least one processor to implement the method of any one of claims 1 to 13.

15. A non-transitory computer-readable storage medium for storing computer instructions, wherein the computer instructions are configured to cause a computer to implement the method of any one of claims 1 to 14.

determining diversity information of a target population — 101

↓

determining a temperature parameter according to the diversity information — 102

↓

selecting, from the target population according to the temperature parameter, a first parent program and a second parent program corresponding to the first parent program — 103

↓

obtaining a target program by performing an evolution iteration according to the first parent program and the second parent program — 104

FIG. 1

obtaining a first embedding vector by performing feature extraction on a first candidate program in the target population — 201

↓

obtaining a conversion result by performing formal conversion processing on the first candidate program — 202

↓

obtaining a second embedding vector by performing feature extraction on the conversion result — 203

↓

obtaining a fused representation vector by fusing the first embedding vector and the second embedding vector — 204

↓

obtaining the diversity information according to the fused representation vector — 205

↓

determining a temperature parameter according to the diversity information — 206

↓

selecting, from the target population according to the temperature parameter, a first parent program and a second parent program corresponding to the first parent program — 207

↓

obtaining a target program by performing an evolution iteration according to the first parent program and the second parent program — 208

FIG. 2

| determining diversity information of a target population | 301 |

↓

| obtaining a second value by performing a modulo operation on a first value according to a current evolution iteration number | 302 |

↓

| determining the temperature parameter according to a ratio of the second value to the first value and the diversity index | 303 |

↓

| selecting, from the target population according to the temperature parameter, a first parent program and a second parent program corresponding to the first parent program | 304 |

↓

| obtaining a target program by performing an evolution iteration according to the first parent program and the second parent program | 305 |

FIG. 3

| determining diversity information of a target population | 401 |

↓

| determining a temperature parameter according to the diversity information | 402 |

↓

| determining a target cluster from at least one cluster of the target population according to the temperature parameter | 403 |

↓

| selecting the first parent program from the target cluster | 404 |

↓

| selecting the second parent program from the target population according to the first parent program | 405 |

↓

| obtaining the target program by performing the evolution iteration according to the first parent program and the second parent program | 406 |

FIG. 4

**500**

agent

first determining module — 510

second determining module — 520

selecting module — 530

generating module — 540

FIG. 5

**600**

computing unit — 601

ROM — 602

RAM — 603

— 604

I/O interface — 605

input unit — 606

output unit — 607

storage unit — 608

communication unit — 609

FIG. 6